# EUROPEAN PATENT APPLICATION

(11) **EP 3 798 859 A1**
(43) Date of publication of application: **31.03.2021**
(21) Application number: 20181394.6
(22) Date of filing: 22.06.2020
(51) Int. Cl.: G06F 16/13, G06F 16/31

(54) **FILE SYSTEM USING APPROXIMATE MEMBERSHIP FILTERS**

(30) Priority: 26.09.2019 US 201916584183
(71) Applicant: Citrix Systems Inc., Fort Lauderdale, FL 33309 (US)
(72) Inventor: Polozkov, Igor, Burlington, MA Massachusetts 01830 (US)
(74) Representative: Hanna Moore + Curley

(57) **Abstract**

Techniques are disclosed for facilitating computationally efficient access to file, such as file in a layered environment. An example methodology (800) implementing the techniques includes querying (802) a data structure to determine whether a file is present on a disk volume associated with the data structure. The data structure can indicate either that the file is not present on the associated disk volume or that the file is probably present on the associated disk volume. In response to a reply indicating the file is not present on the disk volume, no interrogation (810) of the disk volume for the file is made. Conversely, in response to a reply indicating the file is probably present on the disk volume, an interrogation (812) of the disk volume for the file is made.

## Description

### BACKGROUND

Application layering is a technology for delivering applications that run in individual layers (i.e., virtual disks). These applications run separate from a virtual, or in some cases physical desktop, but interact with the operating system and other applications as if they are installed natively on a base image or hard drive. Each individual layer can have its own file system and a set of file system objects. In this sense, a layer can be considered a container for the file system objects and registry entries that are unique to that layer. Typically, a layering engine builds the layers in advance, and delivers the layers assigned to a user to layering software, which combines the layers into a layered image. Such layering software can attach additional layers for a user at the time of user login.

### SUMMARY

In accordance with the concepts, systems, and techniques described herein, a method may include, responsive to a request to access a file of a file system, querying a data structure to determine whether the file is present on a disk volume associated with the data structure. The method may further include, responsive to a reply to the query that indicates the file is not present on the disk volume, not interrogating the disk volume for the file so as to reduce the number of input/output (I/O) operations performed by the file system to locate the file.

In one aspect, the method may include, responsive to a reply to the query that indicates the file is probably present on the disk volume, interrogating the disk volume for the file.

In one aspect, the data structure may be a first data structure and the disk volume may be a first disk volume, and the method may include, responsive to a determination that the file is not present on the first disk volume, querying a second, different data structure to determine whether the file is present on a second, different disk volume associated with the different data structure.

In one aspect, the data structure includes a plurality of hash values, at least one hash value being associated with a file present on the disk volume.

In one aspect, the method may include storing the data structure in volatile memory.

In one aspect, the data structure is provided in a layered environment, the data structure being associated with a layer associated with the disk volume.

In one aspect, the method may include generating the data structure at a time of finalizing the layer.

In one aspect, the data structure includes one of a quotient filter, a Bloom filter, or a Cuckoo filter.

According to one illustrative embodiment, non-transitory machine-readable medium may encode instructions that when executed by one or more processors cause a process to be carried out. The process may include, responsive to a request to access a file of a file system, querying a filter to determine whether the file is present on a disk volume associated with the filter, the filter configured to specify that the file is not present on the disk volume or that the file is probably present on the disk volume. The process may further include, responsive to a reply to the query that indicates the file is not present on the disk volume, not interrogating the disk volume for the file so as to reduce the number of input/output (I/O) operations performed by the file system to locate the file.

In one aspect, the process may include, responsive to a reply to the query that indicates the file is probably present on the disk volume, interrogating the disk volume for the file.

In one aspect, the filter is a first filter and the disk volume is a first disk volume, and the process may include, responsive to a determination that the file is not present on the first disk volume, querying a second filter to determine whether the file is present on a second disk volume associated with the second filter. The second filter is configured to specify that the file is not present on the second disk volume or that the file is probably present on the second disk volume.

In one aspect, the filter includes a plurality of hash values, at least one hash value being associated with a file present on the disk volume.

In one aspect, the filter is provided in a layered environment, the filter being associated with a layer associated with the disk volume.

In one aspect, the filter includes one of a quotient filter, a Bloom filter, or a Cuckoo filter.

In one aspect, the filter is stored in volatile memory.

According to another illustrative embodiment, a system includes a memory and one or more processors in communication with the memory. The processor is configured to, responsive to a request to access a file of a file system, query a data structure to determine whether the file is present on a disk volume associated with the data structure, and responsive to a reply to the query that indicates the file is not present on the disk volume, not interrogate the disk volume for the file so as to reduce the number of input/output (I/O) operations performed by the file system to locate the file.

In one aspect, the one or more processors may also, responsive to a reply to the query that indicates the file is probably present on the disk volume, interrogate the disk volume for the file.

In one aspect, the data structure is a first data structure and the disk volume is a first disk volume, the one or more processors may also, responsive to a determination that the file is not present on the first disk volume, query a second, different data structure to determine whether the file is present on a second, different disk volume associated with the different data structure.

### BRIEF DESCRIPTION OF THE DRAWINGS

The foregoing and other objects, features and advantages will be apparent from the following more particular description of the embodiments, as illustrated in the accompanying drawings in which like reference characters refer to the same parts throughout the different views. The drawings are not necessarily to scale, emphasis instead being placed upon illustrating the principles of the embodiments.
Fig. 1 depicts an illustrative computer system architecture that may be used in accordance with one or more illustrative aspects of the concepts described herein.
Fig. 2 depicts an illustrative remote-access system architecture that may be used in accordance with one or more illustrative aspects of the concepts described herein.
Fig. 3 depicts an illustrative virtualized (hypervisor) system architecture that may be used in accordance with one or more illustrative aspects of the concepts described herein.
Fig. 4 depicts an illustrative cloud-based system architecture that may be used in accordance with one or more illustrative aspects of the concepts described herein.
Fig. 5 is a block diagram illustrating selective components of an example computing device in which various aspects of the disclosure may be implemented, in accordance with an embodiment of the present disclosure.
Fig. 6 is a diagram illustrating filters implemented in an example layered environment, in accordance with an embodiment of the present disclosure.
Fig. 7 is a diagram illustrating example interactions between an example file system and application layers to determine the presence of a file, in accordance with an embodiment of the present disclosure.
Fig. 8 is a flow diagram illustrating an example process for interrogating a disk volume for a file, in accordance with an embodiment of the present disclosure.

### DETAILED DESCRIPTION

In layered environment, a file system presented to the end user is composed dynamically from multiple volumes. In such a layered environment, a virtualized view of a file system and registry that is formed dynamically from multiple volumes may be presented to a user. For example, such a file system can transparently combine multiple actual (e.g., distinct) volumes and present them as a single drive to the user. In accordance with one aspect of the concepts described herein, it has been recognized that in a conventional layered environment, when a process or user desires to access a file, such as open a file for a first time, a file system needs to probe and query multiple volumes until the file is actually found or all volumes were searched and it is determined the file doesn't actually exist on any of the volumes in the system (i.e., conventional solutions to the problem of locating a file or determining that a file does not exist on any of the volumes relies on querying many or all active volumes associated with layers when the file is being opened by a user). Such a probe and query approach may create a significant load to a file system resulting in perceived latency. This is particularly true in a high load environment where there may be a very high number of unsuccessful disk input/output (I/O) operations.

Described herein are concepts, systems, and techniques for facilitating computationally efficient access to files, such as files in a layered environment.

According to an embodiment, a file system, such as, for example, a New Technology File System (NTFS) or any other suitable file system, is programmed or otherwise configured to query a data structure, such as a quotient filter, Bloom filter, Cuckoo filter, or other suitable probabilistic data structure or approximate member query (AMQ) filter, to determine whether a file is probably (may be) found on a disk volume (or more simply "volume") prior to performing a disk I/O operation to locate the desired file on that disk volume. In response to a "possibly found" query reply (i.e., that the file is probably present on the disk volume), the file system proceeds with the disk input/output (I/O) operation to locate the file on that disk volume. Otherwise, in response to a "not found" query reply (i.e., that the file is not present on the disk volume), the file system does not perform the disk I/O operation for that particular disk volume but, rather queries another data structure associated with a different volume until the requested file is located or all the data structures have been queried. Thus, the file system is able to significantly reduce, and in some cases effectively eliminate, costly disk I/O operations to volumes that do not contain the requested file.

In more detail, and according to one such embodiment, a data structure is generated for each disk volume. In some such embodiments, the data structure can include a hash value (or more simply a hash) or other suitable representation for each file that is present on the volume. In one implementation, the hashes can be queried to determine whether a file is probably (may be) found on a particular volume associated with the data structure. If the reply to the query is negative (i.e., a reply indicating that the hash of the file is not found in the data structure), there is no need to interrogate or otherwise search the volume associated with the data structure for the file of interest. An interrogation of the volume associated with the data structure is performed only if the reply to the query is positive (i.e., a reply indicating that the representation or hash of the file is found in the data structure and, thus, the file of interest is probably present on the volume associated with the data structure). Due to the nature of the data structure, negative replies (i.e., replies indicating that hashes of files are not found in the data structure) completely eliminate unnecessary disk I/O.

The disclosed techniques provide numerous advantages over previous techniques for file system layering and access. For example, and according to an embodiment, the techniques employ a data structure for accessing a file in a layered environment. Thus, unlike conventional techniques that query many or all active volumes to locate a file, the file system according to an embodiment of the present disclosure queries a data structure prior to performing a disk I/O operation to reduce, and in some cases effectively eliminate, unnecessary and slow I/O operations. The reduction or elimination of unnecessary I/O operations may result in less latency, improved user experience, and less power consumption. In addition, the disclosed techniques, according to some embodiments, do not store the names of the files or file metadata in the data structure. Rather, a system configured in accordance with an embodiment of the present disclosure utilizes hashes of file names and directories in the data structure in a space and time efficient manner. This allows the data structure to be stored in volatile memory, such as random-access memory (RAM) of the system for improved efficiency as compared to storing the data structure in relatively less efficient and/or remote storage. Further, in some embodiments, the data structure for a layer is generated (e.g., built) at or otherwise proximate to the time the layer is being finalized so as to minimize additional maintenance overhead at run time. It will be appreciated that the various embodiments of the disclosed techniques are particularly beneficial in instances where continuous requests are made to open or otherwise access nonexistent files. For example, an application may continuously try to open nonexistent files. By utilizing the data structure as variously described herein, no actual I/O operation will be performed for such continuous attempts. Note also that the various embodiments of the disclosed techniques are particularly beneficial for file systems that include large numbers or very large numbers of files. In these environments, the actual number of I/O operations performed may be significantly reduced, for example, by up to a factor of the number of data structures. These and other advantages and alternative embodiments will be apparent in light of this disclosure.

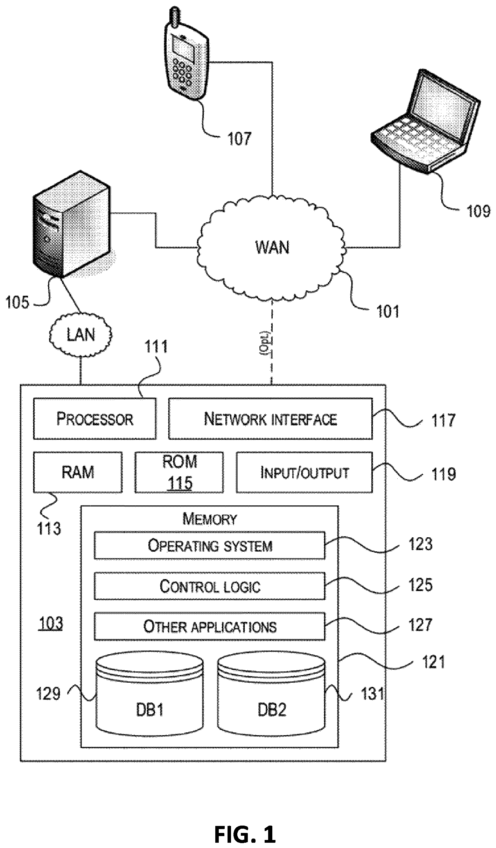

Computer software, hardware, and networks may be utilized in a variety of different system environments, including standalone, networked, remote-access (aka, remote desktop), virtualized, and/or cloud-based environments, among others. Fig. 1 illustrates one example of a system architecture and data processing device that may be used to implement one or more illustrative aspects of the concepts described herein in a standalone and/or networked environment. Various network node devices 103, 105, 107, and 109 may be interconnected via a wide area network (WAN) 101, such as the Internet. Other networks may also or alternatively be used, including private intranets, corporate networks, local area networks (LAN), metropolitan area networks (MAN), wireless networks, personal networks (PAN), and the like. Network 101 is for illustration purposes and may be replaced with fewer or additional computer networks. A local area network 133 may have one or more of any known LAN topologies and may use one or more of a variety of different protocols, such as Ethernet. Devices 103, 105, 107, and 109 and other devices (not shown) may be connected to one or more of the networks via twisted pair wires, coaxial cable, fiber optics, radio waves, or other communication media.

The term "network" as used herein and depicted in the drawings refers not only to systems in which remote storage devices are coupled together via one or more communication paths, but also to stand-alone devices that may be coupled, from time to time, to such systems that have storage capability. Consequently, the term "network" includes not only a "physical network" but also a "content network," which is comprised of the data-attributable to a single entity-which resides across all physical networks.

The components and devices which make up the system of Fig. 1 may include a data server 103, a web server 105, and client computers 107, 109. Data server 103 provides overall access, control and administration of databases and control software for performing one or more illustrative aspects of the concepts described herein. Data server 103 may be connected to web server 105 through which users interact with and obtain data as requested. Alternatively, data server 103 may act as a web server itself and be directly connected to the Internet. Data server 103 may be connected to web server 105 through local area network 133, wide area network 101 (e.g., the Internet), via direct or indirect connection, or via some other network. Users may interact with data server 103 using remote computers 107, 109, e.g., using a web browser to connect to data server 103 via one or more externally exposed web sites hosted by web server 105. Client computers 107, 109 may be used in concert with data server 103 to access data stored therein or may be used for other purposes. For example, from client device 107 a user may access web server 105 using an Internet browser, as is known in the art, or by executing a software application that communicates with web server 105 and/or data server 103 over a computer network (such as the Internet).

**Servers** and applications may be combined on the same physical machines, and retain separate virtual or logical addresses, or may reside on separate physical machines. Fig. 1 illustrates just one example of a network architecture that may be used in the system architecture and data processing device of Fig. 1, and those of skill in the art will appreciate that the specific network architecture and data processing devices used may vary, and are secondary to the functionality that they provide, as further described herein. For example, services provided by web server 105 and data server 103 may be combined on a single server.

Each component 103, 105, 107, 109 may be any type of known computer, server, or data processing device. Data server 103, e.g., may include a processor 111 controlling overall operation of data server 103. Data server 103 may further include a random access memory (RAM) 113, a read only memory (ROM) 115, a network interface 117, input/output interfaces 119 (e.g., keyboard, mouse, display, printer, etc.), and a memory 121. Input/output (I/O) interfaces 119 may include a variety of interface units and drives for reading, writing, displaying, and/or printing data or files. Memory 121 may store operating system software 123 for controlling overall operation of the data server 103, control logic 125 for instructing data server 103 to perform aspects of the concepts described herein, and other application software 127 providing secondary, support, and/or other functionality which may or might not be used in conjunction with aspects of the concepts described herein. Control logic 125 may also be referred to herein as the data server software. Functionality of the data server software may refer to operations or decisions made automatically based on rules coded into the control logic, made manually by a user providing input into the system, and/or a combination of automatic processing based on user input (e.g., queries, data updates, etc.).

Memory 121 may also store data used in performance of one or more aspects of the concepts described herein. Memory 121 may include, for example, a first database 129 and a second database 131. In some embodiments, the first database may include the second database (e.g., as a separate table, report, etc.). That is, the information can be stored in a single database, or separated into different logical, virtual, or physical databases, depending on system design. Devices 105, 107, and 109 may have similar or different architecture as described with respect to data server 103. Those of skill in the art will appreciate that the functionality of data server 103 (or device 105, 107, or 109) as described herein may be spread across multiple data processing devices, for example, to distribute processing load across multiple computers, to segregate transactions based on geographic location, user access level, quality of service (QoS), etc.

One or more aspects of the concepts described here may be embodied as computer-usable or readable data and/or as computer-executable instructions, such as in one or more program modules, executed by one or more computers or other devices as described herein. Generally, program modules include routines, programs, objects, components, data structures, etc. that perform particular tasks or implement particular abstract data types when executed by a processor in a computer or other device. The modules may be written in a source code programming language that is subsequently compiled for execution or may be written in a scripting language such as (but not limited to) Hypertext Markup Language (HTML) or Extensible Markup Language (XML). The computer executable instructions may be stored on a computer readable storage medium such as a nonvolatile storage device. Any suitable computer readable storage media may be utilized, including hard disks, CD-ROMs, optical storage devices, magnetic storage devices, and/or any combination thereof. In addition, various transmission (non-storage) media representing data or events as described herein may be transferred between a source node and a destination node (e.g., the source node can be a storage or processing node having information stored therein which information can be transferred to another node referred to as a "destination node"). The media can be transferred in the form of electromagnetic waves traveling through signal-conducting media such as metal wires, optical fibers, and/or wireless transmission media (e.g., air and/or space). Various aspects of the concepts described herein may be embodied as a method, a data processing system, or a computer program product. Therefore, various functionalities may be embodied in whole or in part in software, firmware, and/or hardware or hardware equivalents such as integrated circuits, field programmable gate arrays (FPGA), and the like. Particular data structures may be used to more effectively implement one or more aspects of the concepts described herein, and such data structures are contemplated within the scope of computer executable instructions and computer-usable data described herein.

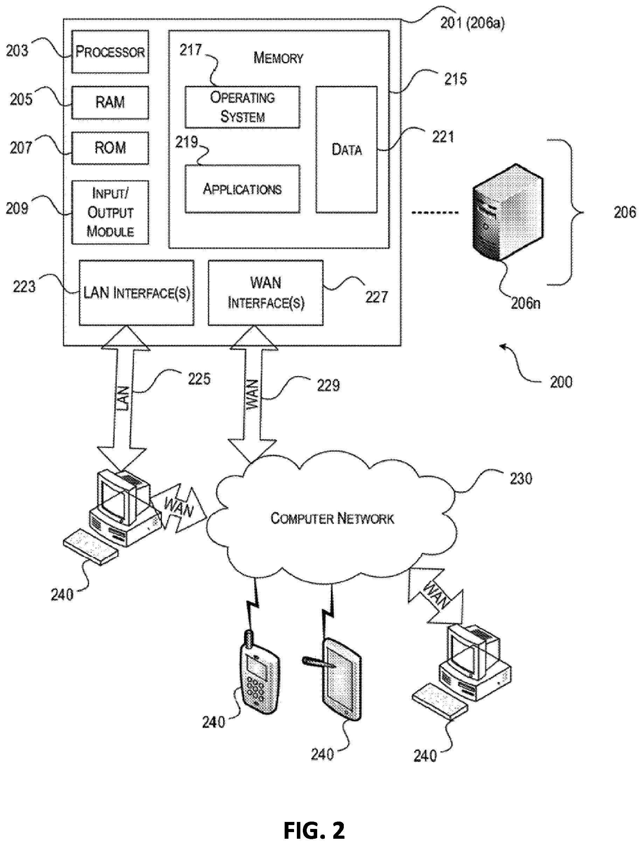

With further reference to Fig. 2, one or more aspects of the concepts described herein may be implemented in a remote-access environment. Fig. 2 depicts an example system architecture including a computing device 201 in an illustrative computing environment 200 that may be used according to one or more illustrative aspects of the concepts described herein. Computing device 201 may be used as a server 206a in a single-server or multi-server desktop virtualization system (e.g., a remote access or cloud system) configured to provide virtual machines (VMs) for client access devices. Computing device 201 may have a processor 203 for controlling overall operation of the server and its associated components, including a RAM 205, a ROM 207, an input/output (I/O) module 209, and a memory 215.

I/O module 209 may include a mouse, keypad, touch screen, scanner, optical reader, and/or stylus (or other input device(s)) through which a user of computing device 201 may provide input, and may also include one or more of a speaker for providing audio output and one or more of a video display device for providing textual, audiovisual, and/or graphical output. Software may be stored within memory 215 and/or other storage to provide instructions to processor 203 for configuring computing device 201 into a special purpose computing device in order to perform various functions as described herein. For example, memory 215 may store software used by the computing device 201, such as an operating system 217, application programs 219, and an associated database 221.

Computing device 201 may operate in a networked environment supporting connections to one or more remote computers, such as terminals 240 (also referred to as client devices). Terminals 240 may be personal computers, mobile devices, laptop computers, tablets, or servers that include many or all the elements described above with respect to data server 103 or computing device 201. The network connections depicted in Fig. 2 include a local area network (LAN) 225 and a wide area network (WAN) 229 but may also include other networks. When used in a LAN networking environment, computing device 201 may be connected to LAN 225 through an adapter or network interface 223. When used in a WAN networking environment, computing device 201 may include a modem or other wide area network interface 227 for establishing communications over WAN 229, such as to computer network 230 (e.g., the Internet). It will be appreciated that the network connections shown are illustrative and other means of establishing a communication link between the computers may be used. Computing device 201 and/or terminals 240 may also be mobile terminals (e.g., mobile phones, smartphones, personal digital assistants (PDAs), notebooks, etc.) including various other components, such as a battery, speaker, and antennas (not shown).

Aspects of the concepts described herein may also be operational with numerous other general purpose or special purpose computing system environments or configurations. Examples of other computing systems, environments, and/or configurations that may be suitable for use with aspects of the concepts described herein include, but are not limited to, personal computers, server computers, handheld or laptop devices, multiprocessor systems, microprocessor-based systems, set top boxes, programmable consumer electronics, network personal computers (PCs), minicomputers, mainframe computers, distributed computing environments that include any of the above systems or devices, and the like.

**As** shown in Fig. 2, one or more terminals 240 may be in communication with one or more servers 206a-206n (generally referred to herein as "server(s) 206"). In one embodiment, computing environment 200 may include a network appliance installed between server(s) 206 and terminals 240. The network appliance may manage client/server connections, and in some cases can load balance client connections amongst a plurality of back-end servers 206.

Terminals 240 may in some embodiments be referred to as a single computing device or a single group of client computing devices, while server(s) 206 may be referred to as a single server 206 or a group of servers 206. In one embodiment, a single terminal 240 communicates with more than one server 206, while in another embodiment a single server 206 communicates with more than one terminal 240. In yet another embodiment, a single terminal 240 communicates with a single server 206.

Terminal 240 can, in some embodiments, be referred to as any one of the following non-exhaustive terms: client machine(s); client(s); client computer(s); client device(s); client computing device(s); local machine; remote machine; client node(s); endpoint(s); or endpoint node(s). Server 206, in some embodiments, may be referred to as any one of the following non-exhaustive terms: server(s), local machine; remote machine; server farm(s), or host computing device(s).

In one embodiment, terminal 240 may be a VM. The VM may be any VM, while in some embodiments the VM may be any VM managed by a Type 1 or Type 2 hypervisor, for example, a hypervisor developed by Citrix Systems, IBM, VMware, or any other hypervisor. In some aspects, the VM may be managed by a hypervisor, while in other aspects the VM may be managed by a hypervisor executing on server 206 or a hypervisor executing on terminal 240.

Some embodiments include a terminal, such as terminal 240, that displays application output generated by an application remotely executing on a server, such as server 206, or other remotely located machine. In these embodiments, terminal 240 may execute a VM receiver program or application to display the output in an application window, a browser, or other output window. In one example, the application is a desktop, while in other examples the application is an application that generates or presents a desktop. A desktop may include a graphical shell providing a user interface for an instance of an operating system in which local and/or remote applications can be integrated. Applications, as used herein, are programs that execute after an instance of an operating system (and, optionally, also the desktop) has been loaded.

Server 206, in some embodiments, uses a remote presentation protocol or other program to send data to a thin-client or remote-display application executing on the client to present display output generated by an application executing on server 206. The thin-client or remote-display protocol can be any one of the following non-exhaustive list of protocols: the Independent Computing Architecture (ICA) protocol developed by Citrix Systems, Inc. of Fort Lauderdale, Florida; or the Remote Desktop Protocol (RDP) manufactured by Microsoft Corporation of Redmond, Washington.

A remote computing environment may include more than one server 206a-206n logically grouped together into a server farm 206, for example, in a cloud computing environment. Server farm 206 may include servers 206a-206n that are geographically dispersed while logically grouped together, or servers 206a-206n that are located proximate to each other while logically grouped together. Geographically dispersed servers 206a-206n within server farm 206 can, in some embodiments, communicate using a WAN, MAN, or LAN, where different geographic regions can be characterized as: different continents; different regions of a continent; different countries; different states; different cities; different campuses; different rooms; or any combination of the preceding geographical locations. In some embodiments, server farm 206 may be administered as a single entity, while in other embodiments server farm 206 can include multiple server farms.

In some embodiments, server farm 206 may include servers that execute a substantially similar type of operating system platform (e.g., WINDOWS, UNIX, LINUX, iOS, ANDROID, SYMBIAN, etc.) In other embodiments, server farm 206 may include a first group of one or more servers that execute a first type of operating system platform, and a second group of one or more servers that execute a second type of operating system platform.

Server 206 may be configured as any type of server, as needed, e.g., a file server, an application server, a web server, a proxy server, an appliance, a network appliance, a gateway, an application gateway, a gateway server, a virtualization server, a deployment server, a Secure Sockets Layer (SSL) VPN server, a firewall, a web server, an application server, a master application server, a server executing an active directory, or a server executing an application acceleration program that provides firewall functionality, application functionality, or load balancing functionality. Other server types may also be used.

Some embodiments include a first server 206a that receives requests from terminal 240, forwards the request to a second server 206b (not shown), and responds to the request generated by terminal 240 with a response from second server 206b (not shown). First server 206a may acquire an enumeration of applications available to terminal 240 as well as address information associated with an application server 206 hosting an application identified within the enumeration of applications. First server 206a can present a response to the client's request using a web interface and communicate directly with terminal 240 to provide terminal 240 with access to an identified application. One or more terminals 240 and/or one or more servers 206 may transmit data over network 230, e.g., network 101.

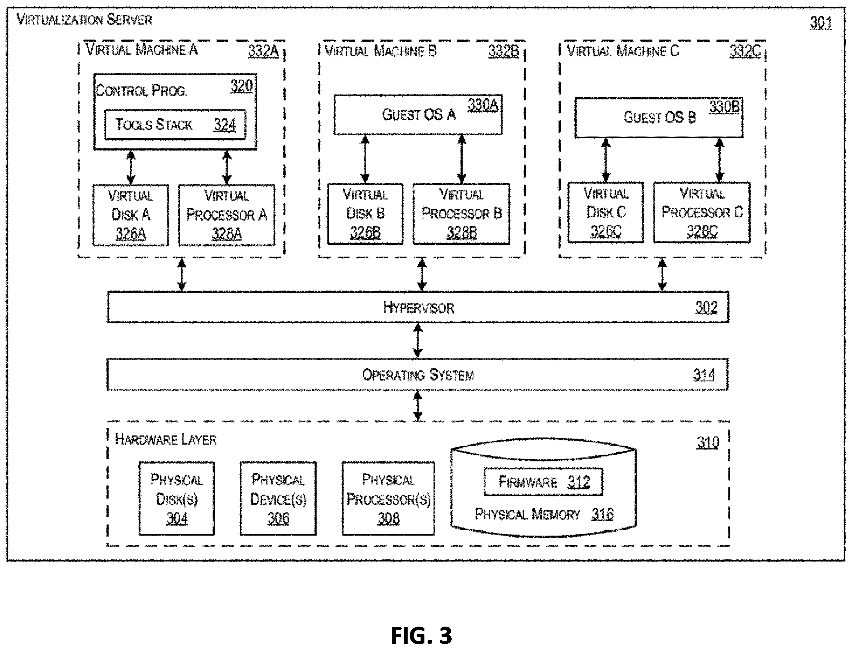

Fig. 3 shows a high-level architecture of an illustrative application virtualization system. As shown, the application virtualization system may be single-server or multi-server system, or cloud system, including at least one virtualization server 301 configured to provide virtual desktops and/or virtual applications to one or more terminals 240 (Fig. 2). As used herein, a desktop refers to a graphical environment or space in which one or more applications may be hosted and/or executed. A desktop may include a graphical shell providing a user interface for an instance of an operating system in which local and/or remote applications can be integrated. Applications may include programs that execute after an instance of an operating system (and, optionally, also the desktop) has been loaded. Each instance of the operating system may be physical (e.g., one operating system per device) or virtual (e.g., many instances of an operating system running on a single device). Each application may be executed on a local device, or executed on a remotely located device (e.g., remoted).

A computer device may be configured as a virtualization server in a virtualization environment, for example, a single-server, multi-server, or cloud computing environment. Virtualization server 301 illustrated in Fig. 3 can be deployed as and/or implemented by one or more embodiments of server 206 illustrated in Fig. 2 or by other known computing devices. Included in virtualization server 301 is a hardware layer 310 that can include one or more physical disks 304, one or more physical devices 306, one or more physical processors 308, and one or more physical memories 316. In some embodiments, a firmware 312 can be stored within a memory element in physical memory 316 and can be executed by one or more of physical processors 308. Virtualization server 301 may further include an operating system 314 that may be stored in a memory element in physical memory 316 and executed by one or more of physical processors 308. Still further, a hypervisor 302 may be stored in a memory element in physical memory 316 and can be executed by one or more of physical processors 308.

Executing on one or more of physical processors 308 may be one or more VMs 332A-C (generally 332). Each VM 332 may have a virtual disk 326A-C and virtual processor 328A-C. In some embodiments, a first VM 332A may execute, using virtual processor 328A, a control program 320 that includes a tools stack 324. Control program 320 may be referred to as a control VM, Dom0, Domain 0, or other VM used for system administration and/or control. In some embodiments, one or more VMs 332B-C can execute, using virtual processor 328B-C, a guest operating system 330A-B.

Physical devices 306 may include, for example, a network interface card, a video card, a keyboard, a mouse, an input device, a monitor, a display device, speakers, an optical drive, a storage device, a universal serial bus connection, a printer, a scanner, a network element (e.g., router, firewall, network address translator, load balancer, virtual private network (VPN) gateway, Dynamic Host Configuration Protocol (DHCP) router, etc.), or any device connected to or communicating with virtualization server 301. Physical memory 316 in hardware layer 310 may include any type of memory. Physical memory 316 may store data, and in some embodiments may store one or more programs, or set of executable instructions. Fig. 3 illustrates an embodiment where firmware 312 is stored within physical memory 316 of virtualization server 301. Programs or executable instructions stored in physical memory 316 can be executed by the one or more processors 308 of virtualization server 301.

In some embodiments, hypervisor 302 may be a program executed by processors 308 on virtualization server 301 to create and manage any number of VMs 332. Hypervisor 302 may be referred to as a VM monitor, or platform virtualization software. In some embodiments, hypervisor 302 can be any combination of executable instructions and hardware that monitors VMs executing on a computing machine. Hypervisor 302 may be Type 2 hypervisor, where the hypervisor executes within operating system 314 executing on virtualization server 301. VMs may execute at a level above the hypervisor. In some embodiments, the Type 2 hypervisor may execute within the context of a user's operating system such that the Type 2 hypervisor interacts with the user's operating system. In other embodiments, one or more virtualization servers 301 in a virtualization environment may instead include a Type 1 hypervisor (not shown). A Type 1 hypervisor may execute on virtualization server 301 by directly accessing the hardware and resources within hardware layer 310. That is, while a Type 2 hypervisor 302 accesses system resources through a host operating system 314, as shown, a Type 1 hypervisor may directly access all system resources without host operating system 314. A Type 1 hypervisor may execute directly on one or more physical processors 308 of virtualization server 301 and may include program data stored in physical memory 316.

Hypervisor 302, in some embodiments, can provide virtual resources to operating systems 330 or control programs 320 executing on VMs 332 in any manner that simulates operating systems 330 or control programs 320 having direct access to system resources. System resources can include, but are not limited to, physical devices 306, physical disks 304, physical processors 308, physical memory 316, and any other component included in virtualization server 301 hardware layer 310. Hypervisor 302 may be used to emulate virtual hardware, partition physical hardware, virtualize physical hardware, and/or execute VMs that provide access to computing environments. In still other embodiments, hypervisor 302 may control processor scheduling and memory partitioning for VM 332 executing on virtualization server 301. In some embodiments, virtualization server 301 may execute hypervisor 302 that creates a VM platform on which guest operating systems may execute. In these embodiments, virtualization server 301 may be referred to as a host server. An example of such a virtualization server is the Citrix Hypervisor provided by Citrix Systems, Inc., of Fort Lauderdale, Florida.

Hypervisor 302 may create one or more VMs 332B-C (generally 332) in which guest operating systems 330 execute. In some embodiments, hypervisor 302 may load a VM image to create VM 332. In other embodiments, hypervisor 302 may execute guest operating system 330 within VM 332. In still other embodiments, VM 332 may execute guest operating system 330.

In addition to creating VMs 332, hypervisor 302 may control the execution of at least one VM 332. In other embodiments, hypervisor 302 may present at least one VM 332 with an abstraction of at least one hardware resource provided by virtualization server 301 (e.g., any hardware resource available within hardware layer 310). In other embodiments, hypervisor 302 may control the way VMs 332 access physical processors 308 available in virtualization server 301. Controlling access to physical processors 308 may include determining whether VM 332 should have access to processor 308, and how physical processor capabilities are presented to VM 332.

**As** shown in Fig. 3, virtualization server 301 may host or execute one or more VMs 332. VM 332 is a set of executable instructions that, when executed by processor 308, may imitate the operation of a physical computer such that VM 332 can execute programs and processes much like a physical computing device. While Fig. 3 illustrates an embodiment where virtualization server 301 hosts three VMs 332, in other embodiments virtualization server 301 can host any number of VMs 332. Hypervisor 302, in some embodiments, may provide each VM 332 with a unique virtual view of the physical hardware, memory, processor, and other system resources available to that VM 332. In some embodiments, the unique virtual view can be based on one or more of VM permissions, application of a policy engine to one or more VM identifiers, a user accessing a VM, the applications executing on a VM, networks accessed by a VM, or any other desired criteria. For instance, hypervisor 302 may create one or more unsecure VMs 332 and one or more secure VMs 332. Unsecure VMs 332 may be prevented from accessing resources, hardware, memory locations, and programs that secure VMs 332 may be permitted to access. In other embodiments, hypervisor 302 may provide each VM 332 with a substantially similar virtual view of the physical hardware, memory, processor, and other system resources available to VMs 332.

Each VM 332 may include a virtual disk 326A-C (generally 326) and virtual processor 328A-C (generally 328.) Virtual disk 326, in some embodiments, is a virtualized view of one or more physical disks 304 of virtualization server 301, or a portion of one or more physical disks 304 of virtualization server 301. The virtualized view of physical disks 304 can be generated, provided, and managed by hypervisor 302. In some embodiments, hypervisor 302 provides each VM 332 with a unique view of physical disks 304. Thus, in these embodiments, the particular virtual disk 326 included in each VM 332 can be unique when compared with other virtual disks 326.

Virtual processor 328 can be a virtualized view of one or more physical processors 308 of virtualization server 301. In some embodiments, the virtualized view of physical processors 308 can be generated, provided, and managed by hypervisor 302. In some embodiments, virtual processor 328 has substantially all the same characteristics of at least one physical processor 308. In other embodiments, virtual processor 328 provides a modified view of physical processors 308 such that at least some of the characteristics of virtual processor 328 are different than the characteristics of the corresponding physical processor 308.

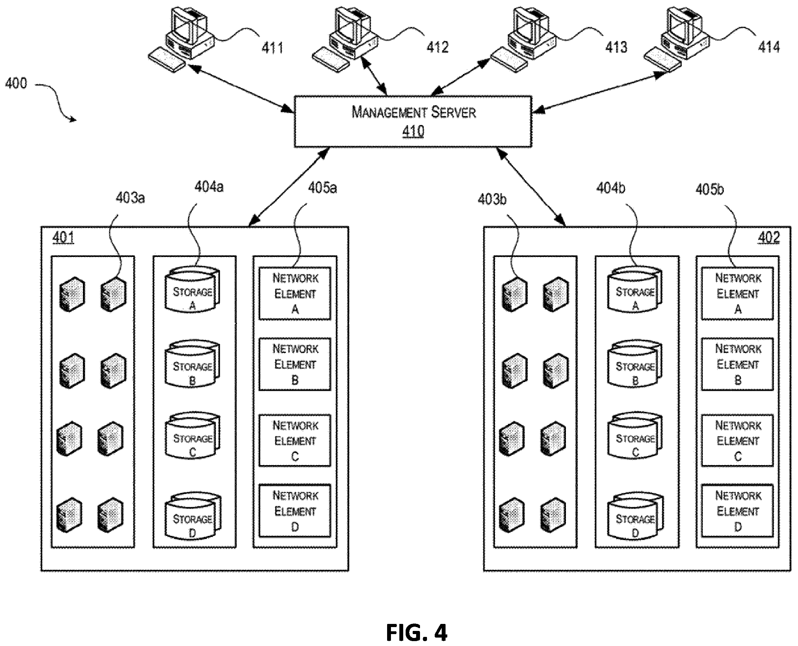

With further reference to Fig. 4, some aspects of the concepts described herein may be implemented in a cloud-based environment. Fig. 4 illustrates an example of a cloud computing environment (or cloud system) 400. As seen in Fig. 4, client computers 411-414 may communicate with a cloud management server 410 to access the computing resources (e.g., host servers 403a-403b generally referred to herein as "host servers 403"), storage resources 404a-404b (generally referred to herein as "storage resources 404"), and network resources 405a-405b (generally referred to herein as "network resources 405")) of the cloud system.

Management server 410 may be implemented on one or more physical servers. Management server 410 may include, for example, a cloud computing platform or solution, such as APACHE CLOUDSTACK by Apache Software Foundation of Wakefield, MA, among others. Management server 410 may manage various computing resources, including cloud hardware and software resources, for example, host servers 403, storage resources 404, and network resources 405. The cloud hardware and software resources may include private and/or public components. For example, a cloud environment may be configured as a private cloud environment to be used by one or more customers or client computers 411-414 and/or over a private network. In other embodiments, public cloud environments or hybrid public-private cloud environments may be used by other customers over an open or hybrid networks.

Management server 410 may be configured to provide user interfaces through which cloud operators and cloud customers may interact with cloud system 400. For example, management server 410 may provide a set of application programming interfaces (APIs) and/or one or more cloud operator console applications (e.g., web-based or standalone applications) with user interfaces to allow cloud operators to manage the cloud resources, configure a virtualization layer, manage customer accounts, and perform other cloud administration tasks. Management server 410 also may include a set of APIs and/or one or more customer console applications with user interfaces configured to receive cloud computing requests from end users via client computers 411-414, for example, requests to create, modify, or destroy VMs within the cloud environment. Client computers 411-414 may connect to management server 410 via the Internet or some other communication network and may request access to one or more of the computing resources managed by management server 410. In response to client requests, management server 410 may include a resource manager configured to select and provision physical resources in the hardware layer of the cloud system based on the client requests. For example, management server 410 and additional components of the cloud system may be configured to provision, create, and manage VMs and their operating environments (e.g., hypervisors, storage resources, services offered by the network elements, etc.) for customers at client computers 411 - 414, over a network (e.g., the Internet), providing customers with computational resources, data storage services, networking capabilities, and computer platform and application support. Cloud systems also may be configured to provide various specific services, including security systems, development environments, user interfaces, and the like.

Certain client computers 411-414 may be related, for example, different client computers creating VMs on behalf of the same end user, or different users affiliated with the same company or organization. In other examples, certain client computers 411-414 may be unrelated, such as users affiliated with different companies or organizations. For unrelated clients, information on the VMs or storage of any one user may be hidden from other users.

Referring now to the physical hardware layer of a cloud computing environment, availability zones 401-402 (or zones) may refer to a collocated set of physical computing resources. Zones may be geographically separated from other zones in the overall cloud computing resources. For example, zone 401 may be a first cloud datacenter located in California and zone 402 may be a second cloud datacenter located in Florida. Management server 410 may be located at one of the availability zones, or at a separate location. Each zone may include an internal network that interfaces with devices that are outside of the zone, such as management server 410, through a gateway. End users of the cloud environment (e.g., client computers 411-414) might or might not be aware of the distinctions between zones. For example, an end user may request the creation of a VM having a specified amount of memory, processing power, and network capabilities. Management server 410 may respond to the user's request and may allocate resources to create the VM without the user knowing whether the VM was created using resources from zone 401 or zone 402. In other examples, the cloud system may allow end users to request that VMs (or other cloud resources) are allocated in a specific zone or on specific resources 403-405 within a zone.

In this example, each zone 401-402 may include an arrangement of various physical hardware components (or computing resources) 403-405, for example, physical hosting resources (or processing resources), physical network resources, physical storage resources, switches, and additional hardware resources that may be used to provide cloud computing services to customers. The physical hosting resources in a cloud zone (e.g., cloud zone 401-402) may include one or more host servers 403, such as virtualization servers 301 (Fig. 3), which may be configured to create and host VM instances. The physical network resources in cloud zone 401 or 402 may include one or more network resources 405 (e.g., network service providers) comprising hardware and/or software configured to provide a network service to cloud customers, such as firewalls, network address translators, load balancers, virtual private network (VPN) gateways, Dynamic Host Configuration Protocol (DHCP) routers, and the like. The storage resources in cloud zone 401-402 may include storage disks (e.g., solid state drives (SSDs), magnetic hard disks, etc.) and other storage devices.

The example cloud computing environment 400 shown in Fig. 4 also may include a virtualization layer with additional hardware and/or software resources configured to create and manage VMs and provide other services to customers using the physical resources in the cloud environment. The virtualization layer may include hypervisors, as described above in connection with Fig. 3, along with other components to provide network virtualizations, storage virtualizations, etc. The virtualization layer may be as a separate layer from the physical resource layer or may share some or all the same hardware and/or software resources with the physical resource layer. For example, the virtualization layer may include a hypervisor installed in each of host servers 403 with the physical computing resources. Known cloud systems may alternatively be used, e.g., WINDOWS AZURE (Microsoft Corporation of Redmond, Washington), AMAZON EC2 (Amazon.com Inc. of Seattle, Washington), IBM BLUE CLOUD (IBM Corporation of Armonk, New York), or others.

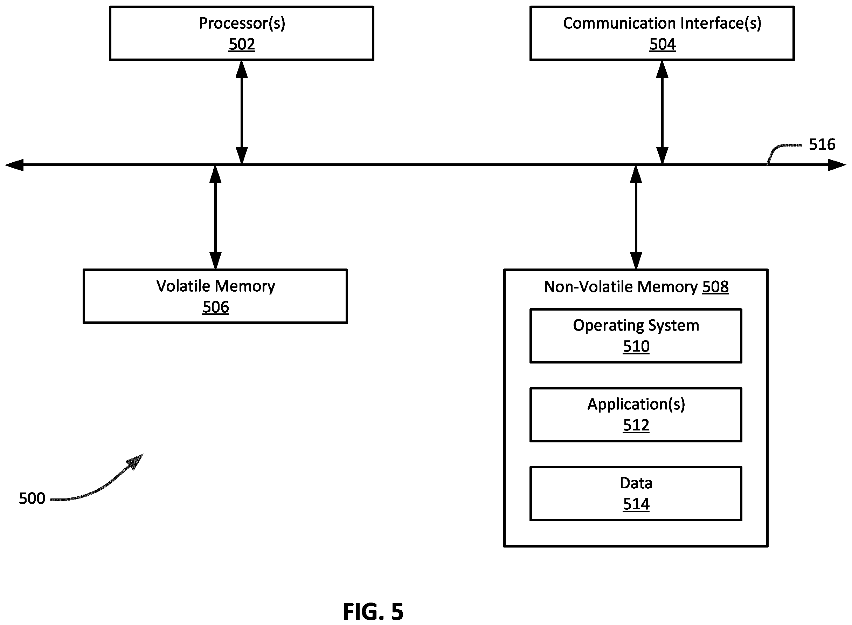

Fig. 5 is a block diagram illustrating selective components of an example computing device 500 in which various aspects of the disclosure may be implemented, in accordance with an embodiment of the present disclosure. Computing device 500 is shown merely as an example of components 105, 107, and 109 of Fig. 1, terminals 240 of Fig. 2, and/or client computers 411-414 of Fig. 4, for instance. However, the illustrated computing device 500 is shown merely as an example and one skilled in the art will appreciate that components 105, 107, and 109 of Fig. 1, terminals 240 of Fig. 2, and/or client computers 411-414 of Fig. 4 may be implemented by any computing or processing environment and with any type of machine or set of machines that may have suitable hardware and/or software capable of operating as described herein.

**As** shown in Fig. 5, computing device 500 includes one or more processor(s) 502, one or more communication interface(s) 504, a volatile memory 506 (e.g., random access memory (RAM)), a non-volatile memory 508, and a communications bus 516.

Non-volatile memory 508 may include: one or more hard disk drives (HDDs) or other magnetic or optical storage media; one or more solid state drives (SSDs), such as a flash drive or other solid-state storage media; one or more hybrid magnetic and solid-state drives; and/or one or more virtual storage volumes, such as a cloud storage, or a combination of such physical storage volumes and virtual storage volumes or arrays thereof.

Non-volatile memory 508 stores an operating system 510, one or more applications 512, and data 514 such that, for example, computer instructions of operating system 510 and/or applications 512 are executed by processor(s) 502 out of volatile memory 506. For example, in some embodiments, applications 512 may cause computing device 500 to implement functionality in accordance with the various embodiments and/or examples described herein. In some embodiments, volatile memory 506 may include one or more types of RAM and/or a cache memory that may offer a faster response time than a main memory. Data may be entered using an input device of computing device 500 or received from I/O device(s) communicatively coupled to computing device 500. Various elements of computing device 500 may communicate via communications bus 516.

Processor(s) 502 may be implemented by one or more programmable processors to execute one or more executable instructions, such as applications 512 and/or a computer program, to perform the functions of the system. As used herein, the term "processor" describes circuitry that performs a function, an operation, or a sequence of operations. The function, operation, or sequence of operations may be hard coded into the circuitry or soft coded by way of instructions held in a memory device and executed by the circuitry. A processor may perform the function, operation, or sequence of operations using digital values and/or using analog signals.

In some embodiments, processor 502 can be embodied in one or more application specific integrated circuits (ASICs), microprocessors, digital signal processors (DSPs), graphics processing units (GPUs), microcontrollers, field programmable gate arrays (FPGAs), programmable logic arrays (PLAs), multi-core processors, or general-purpose computers with associated memory.

Processor 502 may be analog, digital or mixed signal. In some embodiments, processor 502 may be one or more physical processors, or one or more virtual (e.g., remotely located or cloud computing environment) processors. A processor including multiple processor cores and/or multiple processors may provide functionality for parallel, simultaneous execution of instructions or for parallel, simultaneous execution of one instruction on more than one piece of data.

Communication interface(s) 504 may include one or more interfaces to enable computing device 500 to access a computer network such as a Local Area Network (LAN), a Wide Area Network (WAN), a Personal Area Network (PAN), or the Internet through a variety of wired and/or wireless connections, including cellular connections.

In described embodiments, computing device 500 may execute an application on behalf of a user of a client device. For example, computing device 500 may execute one or more virtual machines managed by a hypervisor. Each virtual machine may provide an execution session within which applications execute on behalf of a user or a client device, such as a hosted desktop session. Computing device 500 may also execute a terminal services session to provide a hosted desktop environment. Computing device 500 may provide access to a remote computing environment including one or more applications, one or more desktop applications, and one or more desktop sessions in which one or more applications may execute.

For example, in some embodiments, a first computing device 500 may execute an application on behalf of a user of a client computing device (e.g., client 107 or 109 of Fig. 1), may execute a VM, which provides an execution session within which applications execute on behalf of a user or a client computing device (e.g., any of client computers 411-414 of Fig. 4), such as a hosted desktop session, may execute a terminal services session to provide a hosted desktop environment, or may provide access to a computing environment including one or more of: one or more applications, one or more desktop applications, and one or more desktop sessions in which one or more applications may execute.

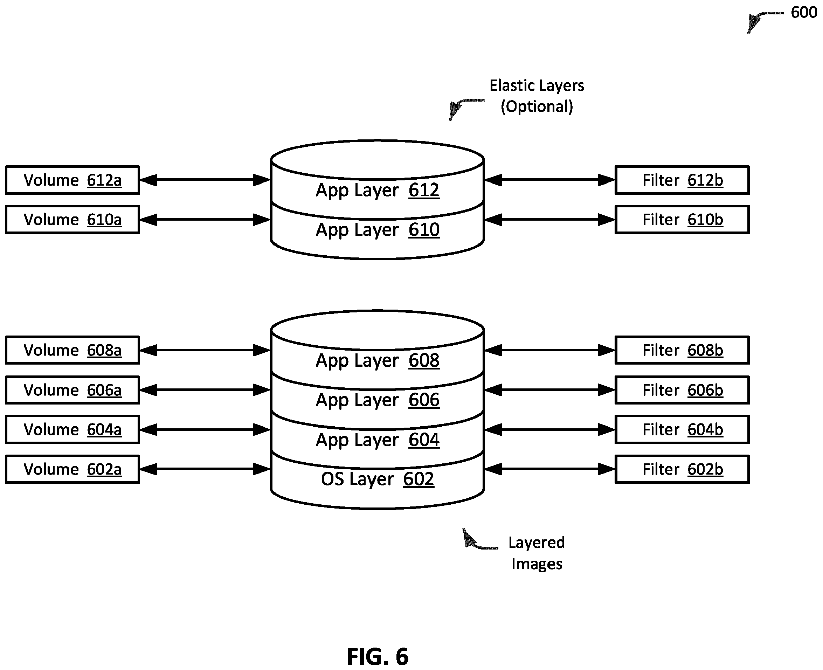

Fig. 6 is a diagram illustrating approximate member query (AMQ) filters 602b, 604b, 606b, 608b, 610b, 612b (or more simply "filters") implemented in an example layered environment 600, in accordance with an embodiment of the present disclosure. For example, in some embodiments, the filters may be stored as computer-executable instructions in a computer-readable medium, such as volatile memory 506 and/or non-volatile memory 508 of computing device 500 of Fig. 5. As shown in Fig. 6, layered environment 600 may include layered images 602, 604, 606, 608 and one or more optional elastic layers (or so-called "hot add" layers) 610, 612. As explained previously, each individual layer can be considered a container for the file system objects and registry entries in a file system that is unique to that layer. In that sense, each layer can be considered to present a virtualized view of a disk (e.g., a logical volume). The file system can use the layers to direct file system operations to an appropriate volume.

In the illustrative example in Fig. 6, the layered images include an OS layer 602 and application layers 604, 606, 608, and the elastic layers include application layers 610, 612. In the layered images, OS layer 602 can be at the bottom and application layers 604, 606, 608 can be added on top of OS layer 602. In some embodiments, the application layers can be added in priority order (e.g., from lowest to highest). For example, the layered images can be a virtual disk (e.g., a logical assignment of a C:\ drive) and the elastic layers can be the individual virtual disks that are added at login as additional logical volumes that are merged onto the layered images (e.g., additional volumes merged onto C:\). In an example context of VMs, the layered images can include layers that are built in advance as a base image for a VM or pool of VMs, and the elastic layers can include the additional layers that are added to the virtual machine session at the time of user login based on user assignments. In any case, note that the elastic layers are optional in the sense that a user may not be assigned any additional layer other than the layered images.

To this end, as can be seen in Fig. 6, OS layer 602 is associated with a volume 602a, application layer 604 is associated with a volume 604a, application layer 606 is associated with a volume 606a, application layer 608 is associated with a volume 608a, application layer 610 is associated with a volume 610a, and application layer 612 is associated with a volume 612a. In a simple example, volume 602a can be the volume that includes an operating system (e.g., Windows 2016) and OS layer 602 can be a layer that contains file objects for the operating system files in volume 602a. Similarly, volume 604a can be a volume that includes one or more applications (e.g., Java® and Adobe® Acrobat®) and layer 604 can be a layer that contains the file system objects and register entries for the application files of the one or more applications in volume 604a, volume 606a can be a volume that includes one or more applications (e.g., Adobe® Suite) and layer 606 can be a layer that contains the file system objects and register entries for the application files of the one or more applications in volume 606a, volume 608a can be a volume that includes one or more applications (e.g., Office 365®) and layer 608 can be a layer that contains the file system objects and register entries for the application files of the one or more applications in volume 608a, volume 610a can be a volume that includes one or more applications (e.g., project management application) and layer 610 can be a layer that contains the file system objects and register entries for the application files of the one or more applications in volume 610a, and volume 612a can be a volume that includes one or more applications (e.g., accounting application) and layer 612 can be a layer that contains the file system objects and register entries for the application files of the one or more applications in volume 612a.

Still referring to Fig. 6, each layer is associated with or otherwise includes a filter (e.g., a probabilistic data structure). As can be seen, OS layer 602 is associated with a filter 602b, application layer 604 is associated with a filter 604b, application layer 606 is associated with a filter 606b, application layer 608 is associated with a filter 608b, application layer 610 is associated with a filter 610b, and application layer 612 is associated with a filter 612b. In some embodiments, one or more layers may be associated with multiple filters. Additionally or alternatively, in some embodiments, multiple layers may be associated with a single filter.

A filter for a layer may be implemented using a probabilistic data structure and configured to specify either that a file is not represented in the layer associated with the filter (i.e., not present on a volume associated with the layer) or that the file is represented in the layer associated with the filter (i.e., probably present on the volume associated with the layer). To this end, in some embodiments, a filter for a layer can include a relatively small amount of data, such as a hash value, that identifies or otherwise represents each file that is contained in a volume associated with the layer. The small amount of data can then be used to specify or otherwise indicate either that a file is not represented in the layer or that the file is represented in the layer. For example, assuming a volume associated with a layer contains files A, B, C, its filter can include a relatively small amount of data that represent files A, B, C, and which can be used in determining that a file is not represented in the layer or that the file is represented in the layer. It will be appreciated in light of this disclosure that a layer may not be provided and, in these cases, a filter can be directly associated with a volume and include a relatively small amount of data that represents each file that is present on the volume. Here, the small amount of data representing the files can be used in indicating that a file is not contained in the volume (i.e., not present on the volume) or that the file is probably contained in the volume (i.e., probably present on the volume). In some embodiments, the filter for a particular layer can be generated (e.g., built) at or otherwise proximate to the time the associated layer is being finalized (e.g., the files that are contained or are to be contained in the volume associated with the layer are determinable). This allows the filter to include representations for all the files contained in the volume associated with the layer. Generating the filter proximate to finalizing the associated layer also provides for minimizing additional maintenance overhead at run time.

In an embodiment, the filters, such as filters 602b, 604b, 606b, 608b, 610b, 612b, may be built or otherwise generated based on the hashes of every file (e.g., file name and directory) that is contained in respective volumes associated with the layers. For example, filter 602b may be built based on the hash values of every file contained in volume 602a associated with OS layer 602, filter 604b may be built based on the hash values of every file contained in volume 604a associated with application layer 604, filter 606b may be built based on the hash values of every file contained in volume 606a associated with application layer 606, filter 608b may be built based on the hash values of every file contained in volume 608a associated with application layer 608, filter 610b may be built based on the hash values of every file contained in volume 610a associated with application layer 610, and filter 612b may be built based on the hash values of every file contained in volume 612a associated with application layer 612.

In one such implementation of a filter utilizing hash values, a hash value can include a quotient and a remainder, where the size or length of the hash value ≥ *q* + *r*. The quotient can be comprised of *q* most significant bits of the hash value, and the remainder can be comprised of the r least significant values of the hash value. The size or length of the hash value ≥ *q* + *r*. The remainders (*r'*s) can be maintained or stored in a table, and a quotient *q* can be used as an address of a "natural slot" in the table where the remainders are stored. In the table, all hash values having the same quotient *q* are stored in contiguous slots. Such a set of hash values can be defined as a run. Note that a particular run's first hash value might not occupy its natural slot if the particular run has been forced or shifted right in the table by some other run, such as by a run in the table to the left of the particular run.

In one example implementation, three additional bits, is_occupied, is_continuation, and is_shifted, can be utilized to resolve possible collisions between hash values. In operation, the is_occupied bit is set when a slot is a natural slot for some hash value stored in the table; the is_continuation bit is set when the slot is occupied but not by the first remainder in a run, and the is_shifted bit is set when the remainder in a slot is not in its natural slot. It will be appreciated that, using the three additional bits described above, any collisions that may occur can be resolved in a manner similar to collision resolution when using a conventional hash table. However, unlike conventional hash tables that utilize overflow areas to deal with collisions, in the various embodiments of the filters described herein, all collisions can be stored in the same table storing the hash values (the quotients and the remainders). This allows for a relatively small (i.e., compact) table with the lookup performance similar to conventional hash tables. In addition, the filter utilizing such hash values can be stored inside the volume or layer associated with the filter. In other cases, the filter utilizing such hash values can be stored separate from the volume or layer associated with the filter. In any case, the filter utilizing such hash values can be stored in volatile memory, such as random-access memory (RAM) of the system on which the file system is executing, to provide improved efficiency. Note that file systems may already compute hash values for each file that is to be accessed (e.g., opened). In such cases, the additional overhead added by the filter includes transforming the hash values into quotient remainder form, checking the natural slot and, if occupied, scanning for a new position.

Note that the *q* parameter defines the maximum capacity of a filter, and the *r* parameter determines the accuracy of the false positives. Also note, by definition, there is zero probability for false negatives. Further, the asymptotic estimates for false positives can be determined to be 2^{-*r*}.

In one example implementation of a filter implementation applying hash values, a remainder value *r* = 4 is determined to be a sufficient value for filtering in application layering environment. Thus, assuming a volume associated with an application layer contains 1,000,000 files, the theoretical size of the filter can be determined from the following parameters:
*q* = 20; (2²⁰ = 1,048,576 slots)
*r* = 4; (approximately 6% false positives)
3 additional service bits for collision resolution.
With the above, the theoretical size can be determined to be 2²⁰ × (4 + 3) = 7,340,032 bits or 896 kibibytes (KiB). Note that the 6% false positives result in 94% true negatives which result in no disk I/O being performed.

As will be appreciated in light of this disclosure, in an embodiment, a registry, such as a database, may be programmed with or otherwise configured to query a probabilistic data structure to determine whether a registry object is probably present in the registry. In some such embodiments, the registry may be a layered registry, and each layer may be associated with one or more probabilistic data structures. Since a registry utilizes a similar probe-and-query technique as that in a file system, the similar technical benefits and advantages may be realized by such registries utilizing probabilistic data structures.

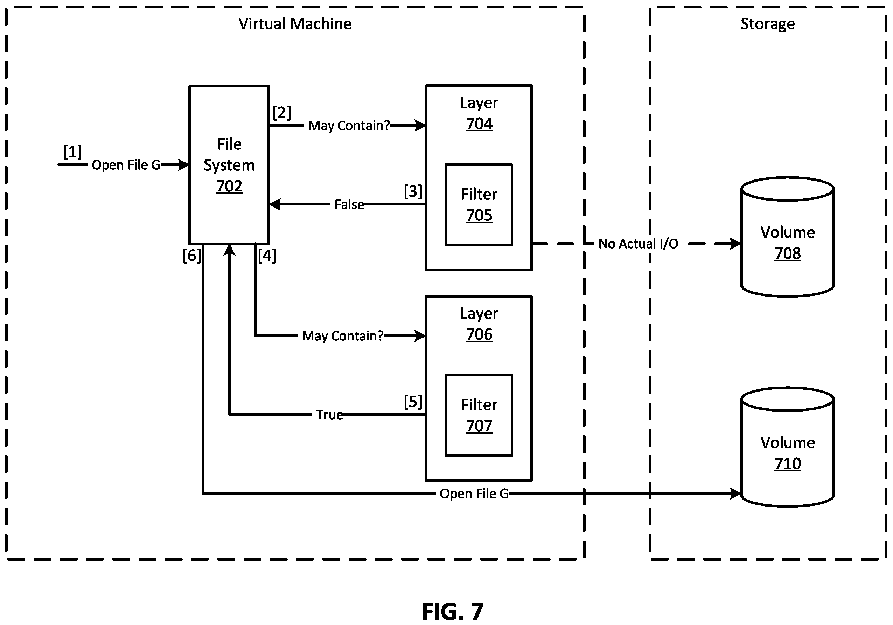

Fig. 7 is a diagram illustrating example interactions between an example file system and application layers to determine the presence of a file, in accordance with an embodiment of the present disclosure. In the illustrative example use case, a user may be logged into and executing a virtual machine (VM), such as, for example, a layered virtual machine, on computing device 500 of Fig. 5, for example. For example, in some embodiments, the virtual machine may be implemented by applications 512 and/or data 514 of computing device 500. The virtual machine may include a layer 704 and a layer 706. Layer 704 is associated with a volume 708 and layer 706 is associated with a volume 710. Each layer may include a filter, such as an approximate membership filter, for example. For example, layer 704 includes a filter 705 and layer 706 includes a filter 707. Also, volume 708 and volume 710 can be mounted as external volumes and may reside either on the same physical machine as the executing VM or on remote storage (e.g., network file share), for example, on one or more physical devices 316 of server 301. In the VM, a file system 702 may transparently combine volume 708 and volume 710 and present these two volumes as a single drive to the user.

Still referring to Fig. 7, in an example operation, the user may request file system 702 to open a file *G* [1]. In response to the request to open the file, file system 702 queries Filter 705 [2] as to whether the file *G* is probably (may be) found on volume 708. Note that file system 702 queries filter 705 before probing volume 708 for file *G*. In response to the query, filter 705 replies False [3] indicating that file *G* is not represented in filter 705 and, thus, there is no need to interrogate or otherwise search volume 708 for file *G*. That is, since filter 705 does not include a representation of file *G*, file *G* is not present on volume 708. Note that, in this instance, no disk I/O operation to volume 708 is performed. Having determined that File *G* is not present within Volume A and since there are more filters to query, file system 702 queries filter 707 [4] as to whether the file *G* is probably found on volume 710. Again, note that file system 702 queries filter 707 before probing volume 710 for file *G*. In response to the query, filter 707 replies True [5] indicating that file G is represented in filter 707 and, thus, file *G* is probably present on volume 710. In response to the reply from filter 707, file system 702 interrogates volume 710 for file G [6]. For instance, file system 702 can issue an open file disk I/O operation to volume 710. Note that, due to the possibility of false positives, there is a probability that file G is not present on volume 710, in which case the disk I/O operation will fail. In this case, file system 702 may continue to query any remaining filter as to whether file *G* is probably found on a volume associated with the filter.

In some embodiments, the file system may query the filters according to a priority order. For example, the filters may be assigned a priority relative to each other (e.g., in a manner similar to the priorities of the application layers), and the file system can query the filters in order based on the respective priority assigned to the filters. In some embodiments, a filter may not be provided for one or more of the volumes. For example, in the illustrative example of Fig. 7, filter 705 may be provided for volume 708, but filter 707 may not be provided for 710. In this case, file system 702 can interrogate volume 710 without first querying a filter since a filter is not provided for volume 710. For example, a provided filter may be in an error state or condition or, in some cases, may not have been implemented for a volume.

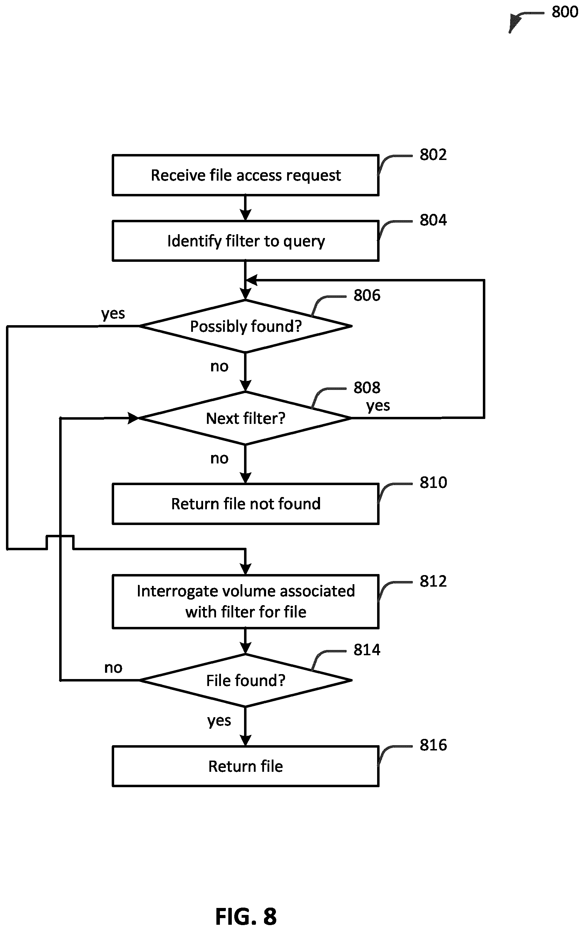

Fig. 8 is a flow diagram illustrating an example process 800 for interrogating a disk volume for a file, in accordance with an embodiment of the present disclosure. For example, in some embodiments, the operations, functions, or actions described in the respective blocks of example process 800 may be implemented by applications 512 and/or data 514 of computing device 500 of Fig. 5. Further, in some embodiments, the operations, functions, or actions illustrated in example process 800 may be stored as computer-executable instructions in a computer-readable medium, such as volatile memory 506 and/or non-volatile memory 508 of computing device 500.

With reference to Fig. 8, the operations of process 800 may be performed by a file system, such as file system 702 illustrated in Fig. 7. At operation 802, a request to access a file is received. For example, the request may be from a user (e.g., an executing application process) to open a file in a logical drive presented to the user. In this example, the logical drive may be comprised of multiple volumes, and each volume may be associated with a filter.

**At** operation 804, a filter (e.g., a probabilistic data structure) to query is identified. For example, the identified filter may be any one of the filters that has not been queried in processing the received request. At operation 806, the identified filter is queried as to whether the requested file may possibly be found (present) on the volume associated with the filter. For example, a hash may be computed on a file name of the requested file, and the hash used to query the identified filter. If the queried filter replies indicating that the requested file is not present on the volume associated with the filter, then, at operation 808, a check is made to determine whether there is another filter to query. If a determination is made that there are no more filters to query (e.g., all filters have been queried), then, at operation 810, a file not found notification is returned. For example, continuing the above example, the file system can return an indication to the user that the requested file is not found on the drive.

If, at operation 808, a determination is made that there is another filter to query, then, at operation 806, the newly identified filter is queried as to whether the requested file may possibly be found (present) on the volume associated with the newly identified filter. Processing then continues with the next operation(s) as described above.

If, at operation 806, the queried filter replies indicating that the requested file is probably present on the volume associated with the filter, then, at operation 812, the volume (i.e., the volume associated with the filter that indicated the file is probably present) is interrogated for the requested file. Continuing the above example, the file system can perform a disk I/O operation to the volume requesting to access the file.

At operation 814, a check is made to determine whether the requested file is found (present) on the volume. Continuing the example, the disk I/O operation may return the requested file from the volume. If a determination is made that the requested file is found on the volume, then, at operation 816, the requested file is returned. Continuing the example, the file system can return an indication to the user that the requested file is found on the drive.

Otherwise, if a determination is made that the requested file is not found on the volume, then, at operation 808, a check is made to determine whether there is another filter to query. Here, since the requested file is not found on the volume, the search for the requested file is continued. Processing then continues with the next operation(s) as described above.

As will be further appreciated in light of this disclosure, with respect to the processes and methods disclosed herein, the functions performed in the processes and methods may be implemented in differing order. Additionally or alternatively, two or more operations may be performed at the same time or otherwise in an overlapping contemporaneous fashion. Furthermore, the outlined actions and operations are only provided as examples, and some of the actions and operations may be optional, combined into fewer actions and operations, or expanded into additional actions and operations without detracting from the essence of the disclosed embodiments.

In the description of the various embodiments, reference is made to the accompanying drawings identified above and which form a part hereof, and in which is shown by way of illustration various embodiments in which aspects of the concepts described herein may be practiced. It is to be understood that other embodiments may be utilized, and structural and functional modifications may be made without departing from the scope of the concepts described herein. It should thus be understood that various aspects of the concepts described herein may be implemented in embodiments other than those specifically described herein. It should also be appreciated that the concepts described herein are capable of being practiced or being carried out in ways which are different than those specifically described herein.

As used in the present disclosure, the terms "engine" or "module" or "component" may refer to specific hardware implementations configured to perform the actions of the engine or module or component and/or software objects or software routines that may be stored on and/or executed by general purpose hardware (e.g., computer-readable media, processing devices, etc.) of the computing system. In some embodiments, the different components, modules, engines, and services described in the present disclosure may be implemented as objects or processes that execute on the computing system (e.g., as separate threads). While some of the system and methods described in the present disclosure are generally described as being implemented in software (stored on and/or executed by general purpose hardware), specific hardware implementations, firmware implements, or any combination thereof are also possible and contemplated. In this description, a "computing entity" may be any computing system as previously described in the present disclosure, or any module or combination of modulates executing on a computing system.

Terms used in the present disclosure and in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, such recitation should be interpreted to mean at least the recited number (e.g., the bare recitation of "two widgets," without other modifiers, means at least two widgets, or two or more widgets). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc.

It is to be understood that the phraseology and terminology used herein are for the purpose of description and should not be regarded as limiting. Rather, the phrases and terms used herein are to be given their broadest interpretation and meaning. The use of "including" and "comprising" and variations thereof is meant to encompass the items listed thereafter and equivalents thereof as well as additional items and equivalents thereof. The use of the terms "connected," "coupled," and similar terms, is meant to include both direct and indirect, connecting, and coupling.

All examples and conditional language recited in the present disclosure are intended for pedagogical examples to aid the reader in understanding the present disclosure, and are to be construed as being without limitation to such specifically recited examples and conditions. Although example embodiments of the present disclosure have been described in detail, various changes, substitutions, and alterations could be made hereto without departing from the spirit and scope of the present disclosure. Accordingly, it is intended that the scope of the present disclosure be limited not by this detailed description, but rather by the claims appended hereto.

## Claims

**1.** A method (800) for providing access to a file, the method comprising:
responsive to a request (802) to access a file of a file system,
querying (806) a data structure to determine whether the file is present on a disk volume associated with the data structure; and
responsive to a reply to the query that indicates the file is not present on the disk volume, not interrogating (810) the disk volume for the file so as to reduce the number of input/output, I/O, operations performed by the file system to locate the file.

**2.** The method of claim 1, further comprising, responsive to a reply to the query that indicates the file is probably present on the disk volume, interrogating (812) the disk volume for the file.

**3.** The method of claim 2, wherein the data structure is a first data structure and the disk volume is a first disk volume, the method further comprises, responsive to a determination that the file is not present on the first disk volume, querying (808, 806) a second, different data structure to determine whether the file is present on a second, different disk volume associated with the different data structure.

**5.** The method of any of claims 1 through 4, wherein the data structure includes a plurality of hash values, at least one hash value being associated with a file present on the disk volume.

**6.** The method of any of claims 1 through 5, further comprising storing the data structure in volatile memory.

**7.** The method of any of claims 1 through 6, wherein the data structure is provided in a layered environment, the data structure being associated with a layer associated with the disk volume.

**8.** The method of claim 7, further comprising generating the data structure at a time of finalizing the layer.

**9.** The method of any of claims 7 and 8, wherein the layer is associated with a virtual disk.

**10.** The method of any of claims 1 through 9, wherein the data structure includes a quotient filter.

**11.** The method of any of claims 1 through 9, wherein the data structure includes a Bloom filter.

**12.** The method of any of claims 1 through 9, wherein the data structure includes a Cuckoo filter.

**13.** The method of any of claims 1 through 9, wherein the data structure includes an approximate member query, AMQ, filter.

**14.** The method of any of claims 1 through 13, wherein the file system includes a New Technology File System, NTFS.

**4.** The method of any of claims 1 through 3, wherein the second disk volume is configured to specify that the file is not present on the second disk volume or that the file is probably present on the second disk volume.

**15.** A system comprising:
a memory; and
one or more processors in communication with the memory and configured to perform a method according to any one of claims 1 through 14.
